# EUROPÄISCHE PATENTSCHRIFT

(11) **EP 1 954 527 B1**
(45) Veröffentlichungstag und Bekanntmachung des Hinweises auf die Patenterteilung: **07.04.2010**
(21) Anmeldenummer: 06807827.8
(22) Anmeldetag: 22.11.2006
(51) Int. Cl.: B60Q 9/00

(54) **WARNEINRICHTUNG UND VERFAHREN ZUR ÜBERMITTLUNG EINES WARNSIGNALS**
WARNING DEVICE AND METHOD FOR TRANSMISSION OF A WARNING SIGNAL
DISPOSITIF D'AVERTISSEMENT ET PROCEDE POUR TRANSMETTRE UN SIGNAL D'AVERTISSEMENT

(30) Priorität: 23.11.2005 DE 102005055743
(43) Veröffentlichungstag der Anmeldung: 13.08.2008
(73) Patentinhaber: ROBERT BOSCH GMBH, 70442 Stuttgart (DE)
(72) Erfinder: SCHICK, Jens, 71083 Herrenberg (DE); LEICHT, Holger, 71296 Heimsheim (DE); FLEISCHER, Klaus-Guenther, 76473 Iffezheim (DE)
(86) Internationale Anmeldenummer: PCT/EP2006/068754
(87) Internationale Veröffentlichungsnummer: WO 2007/060175

(56) Entgegenhaltungen:
- EP-A2- 1 410 972
- WO-A-02/057116
- DE-A1- 10 261 799
- JP-A- 2000 020 900
- JP-A- 2001 199 296
- US-A1- 2004 049 323
- US-A1- 2004 262 063
- US-A1- 2005 275 520

## Beschreibung

### Stand der Technik

Die Erfindung betrifft eine Warneinrichtung für ein Fahrzeug, insbesondere ein Kraftfahrzeug, mit zumindest einem mit einem Fahrzeugführer bei einem Führen des Fahrzeugs in Berührung stehenden, als Signalübermittler zur Übermittlung eines haptischen Warnsignals an den Fahrzeugführer ausgebildeten Kontaktelement. Außerdem betrifft die Erfindung ein Verfahren zur Übermittlung eines Warnsignals an einen Fahrzeugführer eines Fahrzeugs, insbesondere eines Kraftfahrzeugs, wobei ein mit dem Fahrzeugführer bei einem Führen des Fahrzeugs in Berührung stehendes Kontaktelement ein haptisches Warnsignal an den Fahrzeugführer übermittelt.

Eine vorgenannte Warneinrichtung und ein vorgenanntes Verfahren zur Übermittlung eines Warnsignals sind aus einem Hindemisabtastsystem eines Fahrzeugs und einem Vibratioilswarnverfahren nach KR 2005014142 A bekannt. Dort ist vorgesehen, einen Alarm als Vibration unter Verwendung eines Schwingungsgenerators auszugeben. Der Schwingungsgenerator kann zum Beispiel mit einem Sitz verbunden sein.

Darüber hinaus bekannt ist aus Korean Patent Abstracts 1020050019642 A eine Nichtbewegungswamvorrichtung eines Airbags eines Fahrzeugs, um eine Verletzung zu verhindern und um vor einer Nichtfunktion des Airbags durch Entriegeln der Rückenlehne eines Beifahrersitzes und eines Fahrersitzes zu warnen.

Aus der EP 1 410 972 A2 ist eine Fahrzeuglenkvorrichtung und ein Sicherheitssystem bekannt, bei dem im Inneren einer Lenksäule eine Vibrationsvorrichtung angeordnet ist. Die Vibrationsvorrichtung ist so ausgelegt, dass sie ein an der Oberfläche des Lenkradkranzes von einem Fahrer wahrnehmbares haptisches Signal erzeugen kann.

Aus der US 2004/0049323 A1 ist ein haptisches Sitz-Warnungssystem bekannt, dass eine richtungsgebundene Warnung an einen Fahrer ausgeben kann. Wird eine zu hohe Fahrzeuggeschwindigkeit oder ein Fahrspurverlassen detektiert, so können einzelne, in den Fahrersitz angeordnete Motoren derart angeregt werden, dass verschiedene haptische Warnmuster an den Fahrer ausgegeben werden können.

Aus der JP 2000-020900 A ist eine Vibrations-Warneinrichtung für ein Folgefahren bekannt, bei dem ein Fahrer in Abhängigkeit von dem Abstand zu einem vorausfahrenden Fahrzeug gewarnt wird. Eine Warnung kann dabei an den Fahrer über einen Motor ausgegeben werden, der ansonsten zur Einstellung des Fahrersitzes dient. Hierdurch wird ein für den Fahrer fühlbares haptisches Warnsignal erzeugt.

### Vorteile der Erfindung

Von besonderem Vorteil bei der Erfindung, die sich insbesondere für Kraftfahrzeuge, und zwar sowohl für Personenkraftwagen als auch für Nutzfahrzeuge eignet, ist, dass eine sichere und zuverlässige Warnung des Fahrzeugführers, das heißt im Falle eines Kraftfahrzeugs des Fahrers, erfolgen kann, ohne weitere Insassen des Fahrzeugs zu stören oder zu irritieren. Allein der - grundsätzlich für das Führen des Fahrzeugs verantwortliche - Fahrzeugführer erhält das Warnsignal und wird damit zum Beispiel auf eine kritische Fahrsituation aufmerksam gemacht; damit eignet sich die Erfindung vor allem zur Übermittlung von Warnsignalen, die für das Führen des Fahrzeugs von unmittelbarer Bedeutung sind, zum Beispiel zur Übermittlung von Kollisionswarnsignalen. Das Warnsignal besteht in einer einfachen Hin- und Herbewegung, die man auch als Stoß- oder Ruck- oder Hubbewegung bezeichnen kann, des Kontaktelementes, das heißt das Kontaktelement verlässt seine Ausgangsposition, führt eine - vorzugsweise translatorische oder rotatorische - Bewegung bis zu einem Umkehrpunkt in einer Zwischenposition aus und kehrt anschließend, zumindest ohne wesentliche Unterbrechung des Bewegungsvorganges in seine Ausgangsposition zurück. Damit hat das Warnsignal eine wesentlich höhere Aufmerksamkeitswirkung als zum Beispiel ein Vibrationssignal, welches von dem Fahrzeugführer nachteilig beispielsweise auf eine Änderung einer Oberflächenbeschaffenheit einer Fahrbahn zurückgeführt oder sogar als angenehm empfunden werden könnte, so dass die erwünschte Wamwirkung nicht oder zumindest nicht sofort eintreten würde. Vorzugsweise ist das Kontaktelement in einer einzigen Hin- und Herbewegung auslenkbar; es kann jedoch vorgesehen sein, dass das Kontaktelement in mehreren solcher Bewegungen, die nacheinander und durch eine kurze Pause getrennt ausführbar sind, auslenkbar ist. Ebenso kann das erfindungsgemäße Verfahren bevorzugt eine einzige Bewegung vorsehen, wobei aber auch eine Abfolge weniger von durch eine kurze Pause in der Ausgangsposition getrennten einfachen Bewegungen in einer ersten Richtung und in eine entgegengesetzte zweite Richtung zurück in die Ausgangsposition denkbar ist, so dass das Kontaktelement eine kurze Sequenz von abgetrennten, einfachen Hin- und Herbewegungen ausführt. Vorzugsweise wird die Bewegung des Kontaktelementes in die erste Richtung und unmittelbar anschließend in die entgegengesetzte zweite Richtung ausgeführt; grundsätzlich ist es aber auch vorstellbar, dass das Kontaktelement kurz in der Zwischenposition verharrt und die Bewegung dann in die zweite Richtung fortgesetzt wird. Ein Sicherheitsrisiko infolge zu geringer Aufmerksamkeitswirkung schließt die Erfindung, und zwar sowohl die erfindungsgemäße Warneinrichtung als auch das erfindungsgemäße Verfahren, sehr zuverlässig aus. Aufgrund der dadurch ermöglichten Erhöhung der Verkehrssicherheit eignet sich die Erfindung besonders als Warneinrichtung und Verfahren zur Übermittlung eines Warnsignals eines Fahrerassistenzsystems (FAS) eines Kraftfahrzeugs. Beispielsweise kann die Warneinrichtung bei einem Spurverlassenswamung-Fahrerassistenzsystem, das heißt bei einem Lane-Departure-Warning (LDW)-Fahrerassistenzsystem, den Fahrer vor einem unbeabsichtigten Verlassen einer Fahrspur warnen. Denkbar ist zum Beispiel auch ein Vorsehen der Warneinrichtung zur Kollisionswarnung bei einem Kollisionsvermeidungssystem, das heißt einem Collision Prevention System (COPS), oder bei einem Einparkhilfesystem. Mit der Erfindung, die die Übermittlung eines haptischen, also eines den Tastsinn betreffenden, Warnsignals umfasst, werden Mitfahrer in dem Fahrzeug, die für das Führen des Fahrzeugs nicht verantwortlich sind, nicht beunruhigt oder gestört, wie es zum Beispiel bei einem akustischen oder optischen Warnsignal der Fall sein könnte. Durch die Bewegung des Kontaktelementes, das eine Mensch-Maschine-Schnittstelle, auch als Human-Machine Interface (HMI) bezeichnet, bildet, in der erfindungsgemäßen Warneinrichtung mittels eines Motors kann vorteilhaft mit einem sehr einfachen, kostengünstigen und leicht ansteuerbaren Bauelement die Auslenkung des Kontaktelementes vorgenommen werden Erfindungsgemäß wird bei einem motorisch verstellbaren Lenkrad in einem Kraftfahrzeug auf einen an dem Lenkrad bereits vorhandenen Stellmotor zur Nutzung für die Erfindung zurückgegriffen. Erfindungsgemäß ist es vorteilhaft, eine motorische Höhen- und/oder Längenverstellung des Lenkrads so anzusteuern, dass das Lenkrad als Kontaktelement ausgelenkt wird. Unter einen Höhenverstellung soll eine Einstellung für die Höhe des Lenkrads über dem Fahrzeuginnenboden verstanden werden. Unter einen Längenverstellung soll hierbei eine Einstellung des Abstands des Lenkrads von der Instrumententafel verstanden werden, also eine Einstellung der Länge der Lenkachse, die in den Fahrzeuginnenraum hineinragt.

Zur Auslenkung des Kontaktelementes kann auch mehr als ein Motor vorgesehen sein. Die Hin- und Herbewegung des Kontaktelementes kann zum Beispiel durch eine Umschaltung der Bewegungsrichtung des Motors (oder der Motoren) oder durch ein zwischen Motor (oder Motoren) und Kontaktelement angeordnetes Getriebe, beispielsweise ein Exzentergetriebe, erreicht werden. Grundsätzlich können mehrereverschiedenartige oder gleichartige - erfindungsgemäße Kontaktelemente vorgesehen sein. Die erfindungsgemäße Warneinrichtung eignet sich besonders vorteilhaft zur Durchführung des erfindungsgemäßen Verfahrens.

Man könnte sich vorstellen, dass das Kontaktelement beispielsweise in einer nicht zur Erfindung gehörenden Ausführungsform ein Fahrpedal oder ein Bremspedal oder ein Kupplungspedal des Fahrzeugs ist, wobei sich das Warnsignal zum Beispiel durch einen Ruck im Pedal oder durch eine Gegendruckveränderung für den Fahrzeugführer bemerkbar machen könnte. Jedoch arbeitet die erfindungsgemäße Warneinrichtung besonders zuverlässig, wenn das Kontaktelement ein Fahrzeuglenkrad ist, da das Führen des Fahrzeugs regelmäßig ein Halten des Fahrzeuglenkrades durch den Fahrzeugführer erfordert und somit ein dauernder Kontakt besteht, wohingegen ein Pedalkontakt nicht in allen Fahrsituationen vorliegen muss.

Es ist auch denkbar, dass zum Beispiel sowohl ein Fahrzeuglenkrad als auch ein Fahrzeugführersitzelement als Kontaktelement ausgebildet ist. Das Fahrzeugführersitzelement kann zum Beispiel einen kompletten Fahrersitz umfassen oder beispielsweise lediglich eine Rückenlehne oder eine Sitzfläche eines Fahrersitzes sein.

Besonders vorteilhaft ist es, wenn ein mit dem Motor verbundenes Steuergerät und zumindest ein mit dem Steuergerät verbundenes Erfassungselement zur Umfelderfassung des Fahrzeugs vorgesehen sind. Damit kann die Erfindung beispielsweise in eine Umfelderfassungseinrichtung eines Kraftfahrzeuges integriert sein. Das Erfassungselement kann zum Beispiel eine Kamera oder ein Umfelderfassungssensor, beispielsweise ein Radarsensor oder ein Ultraschallsensor, sein. Bei dem Steuergerät kann es sich vorteilhaft zum Beispiel um ein Videosteuergerät handeln. Beispielsweise wird von dem Erfassungselement nach Wahrnehmung eines Hindernisses im Umfeld des Fahrzeuges ein entsprechendes Signal an das Steuergerät gesandt, welches das Signal auswertet und in Abhängigkeit der Auswertung, beispielsweise bei tatsächlicher Kollisionsgefahr, eine entsprechende Waminformation an den Motor sendet, welcher daraufhin das Kontaktelement auslenkt. Insbesondere Steuergerät und Motor können zur Datenübertragung an einen gemeinsamen Datenbus, zum Beispiel einen CAN-Bus, angeschlossen sein. Die Kamera kann beispielsweise Bilder liefern, die dann in dem Videosteuergerät ausgewertet werden, das heißt eine Information darüber, ob sich zum Beispiel ein Hindernis vor dem Fahrzeug befindet, wird in dem Videosteuergerät berechnet. Das Videosteuergerät kann dann ein Warnsignal über den CAN-Bus an ein Steuergerät senden, das die Warneinrichtung koordiniert.

Grundsätzlich kann der Motor beliebig ausgebildet und zum Beispiel ein Hydraulikmotor oder beispielsweise ein Pneumatikmotor sein. Hingegen vereinfacht sich der Aufbau und der Betrieb der erfindungsgemäßen Warneinrichtung, wenn der Motor ein elektrischer Stellmotor ist.

Die Aufmerksamkeitswirkung des Warnsignals kann vorteilhaft weiter erhöht werden, wenn bei dem erfindungsgemäßen Verfahren die Bewegung des Kontaktelementes in die erste Richtung und/oder in die zweite Richtung abgestuft ist. Dabei kann zum Beispiel die Hinbewegung des Kontaktelementes zweistufig, doppelruckartig und die Herbewegung einstufig erfolgen.

Grundsätzlich ist die Bewegung des Kontaktelementes eine kurzzeitige Bewegung, die aber auch eine Zeitdauer von mehr als 1 s umfassen kann. Vorteilhaft kann ein besonders hoher Aufmerksamkeitseffekt dadurch erreicht werden, dass die Bewegung des Kontaktelementes eine maximale Zeitdauer von 0,25 s bis 1 s, vorzugsweise in etwa 0,5 s, umfasst, das heißt die gesamte Hin- und Herbewegung wird innerhalb dieser sehr kurzen Zeitspanne ausgeführt.

Die Bewegung des Kontaktelementes umfasst regelmäßig eine nur geringe Auslenkung. Von Vorteil ist es, wenn die Bewegung des Kontaktelementes eine maximale Auslenkung des Kontaktelementes in einer Richtung von 30 mm umfasst. Beispielsweise kann für eine Auslenkung eines oberen Endes einer Rückenlehne ein Weg von in etwa 20 mm vorgesehen sein, wohingegen eine Auslenkung eines kompletten Fahrersitzes als Kontaktelement in einem Bereich von in etwa 20 mm bis 30 mm liegen kann. Grundsätzlich kann die Bewegung des Kontaktelementes aber auch eine Auslenkung von mehr als 30 mm, zum Beispiel 50 mm oder mehr, umfassen.

Zusätzlich zu der Übermittlung des Warnsignals an sich kann dem Fahrzeugführer vorteilhaft auch eine weitere, die Warnung betreffende Information, beispielsweise ein Hinweis bezüglich einer Wichtigkeit oder Bedeutung der Warnung, mitgeteilt werden, wenn eine Höhe einer Beschleunigung der Bewegung des Kontaktelementes und/oder einer Geschwindigkeit der Bewegung des Kontaktelementes und/oder einer Auslenkung der Bewegung des Kontaktelementes ein Maß ist für eine dem Warnsignal zugeordnete Bedeutung. Damit kann die Bewegung des Kontaktelementes abhängig sein von einer - zum Beispiel von dem Steuergerät als erforderlich angesehenen - Warnintensität in Zusammenhang mit einer momentanen Gefährdungslage des Fahrzeugs.

### Zeichnung

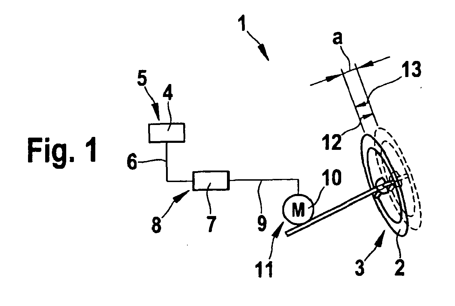

Ausführungsbeispiele der Erfindung sind in der Zeichnung schematisiert dargestellt und werden nachfolgend näher beschrieben, wobei sich jeweils entsprechende Elemente in allen Figuren mit gleichen Bezugszeichen versehen sind. Es zeigen
- Figur 1: eine Warneinrichtung mit einem ersten Kontaktelement.

### Beschreibung der Ausführungsbeispiele

Figur 1 zeigt eine Warneinrichtung 1 eines hier nicht weiter dargestellten Fahrerassistenzsystems eines Kraftfahrzeugs mit einem mit dem Fahrer beim Führen des Kraftfahrzeugs in Berührung stehenden, als Fahrzeuglenkrad 2 ausgebildeten Kontaktelement 3. Ein als Umfelderfassungssensor oder Kamera 4 ausgebildetes Erfassungselement 5 zur Umfelderfassung des Fahrzeugs sendet ein Kamerasignal über eine Verbindungsleitung 6 an ein als Videosteuergerät 7 ausgebildetes Steuergerät 8.

Das Steuergerät 8 wertet das Kamerasignal aus und sendet über eine Verbindungsleitung 9 eine Warninformation an einen als elektrischer Stellmotor 10 ausgebildeten Motor 11, wenn das Steuergerät 8 in dem Kamerasignal zum Beispiel eine Abweichung des Fahrzeugs von einer vorgegebenen Fahrspur des Fahrzeugs erkennt. Die Warninformation steuert den Motor 11 an, der daraus folgend anfährt und das Kontaktelement 3 bewegt, und zwar lenkt der Motor 11 das Kontaktelement 3 in einer einfachen Hin- und Herbewegung, die durch einen ersten Pfeil 12 für die Hinbewegung und einen zweiten Pfeil 13 für die Herbewegung in Figur 1 symbolisiert ist, translatorisch aus. Das Kontaktelement 3 ist somit ein Signalübermittler, es übermittelt die Warninformation des Steuergerätes 8 in Form eines haptischen Warnsignals in Form der Hin- und Herbewegung an den Fahrer.

Im Einzelnen erfolgt die Übermittlung des Warnsignals an den Fahrer in Form der Hin- und Herbewegung dadurch, dass das Kontaktelement 3 aus einer Ausgangsposition, in der das Fahrzeuglenkrad 2 mit durchgezogenen Linien dargestellt ist, eine einfache Bewegung in einer ersten, durch den ersten Pfeil 12 angegebenen Richtung in eine Zwischenposition, in der das Fahrzeuglenkrad mit gestrichelten Linien dargestellt ist, und unmittelbar anschließend in eine der ersten Richtung entgegengesetzte, durch den zweiten Pfeil 13 angegebene Richtung zurück in die Ausgangsposition ausführt. Diese Bewegung des Kontaktelementes 3 umfasst insgesamt eine Zeitdauer von in etwa 0,5 s. Die Auslenkung des Kontaktelementes in einer Richtung, welche Auslenkung durch einen Abstand a der Zwischenposition von der Ausgangsposition angegeben wird, umfasst in diesem Beispiel in etwa 20 mm.

In einer erfindungsgemäßen Ausführungsform ist zur Bewegung des Fahrzeuglenkrads in einem Bereich unterhalb des Lenkrads ein Motor vorgesehen, über den eine Höhenverstellung und/oder eine Längsverstellung des Lenkrades erfolgen können. Dieser Motor wird im Falle einer auszugebenden haptischen Warnung des Fahrers so angesteuert, dass das Lenkrad mit einer entsprechenden Vibration beaufschlagt wird. Der Motor wird dabei beispielsweise über einen Fahrzeugdatenbus angesteuert, z.B. über einen CAN-Bus (CAN = Controller Area Network).

Eine Vibration in Längsrichtung auf die Lenksäule kann dabei dadurch erzeugt werden, dass die Ansteuerung der Lenksäulenmotoren zur Erzeugung der Vibration verändert wird. Bei einer Vibration in Längsrichtung wird kein Drehmoment auf die Lenkung nach links oder rechts ausgeübt, so dass kein Moment über die Lenksäule auf die Fahrbahn übertragen wird. Eine Verschlechterung der Fahrzeugstabilität ist dadurch bei einer entsprechenden Vibration in Längsrichtung ausgeschlossen. Ferner ist es möglich, dass die Übersetzung der Motoren, die auf die Lenksäule wirken, verändert wird. Ferner ist es auch möglich, zusätzlich Vibrationselemente, ähnlich einer Vibration in einem Mobiltelefon, vorzusehen. Außerdem kann auch ein zusätzlicher Motor vorgesehen sein, der mit einer anderen Übersetzung und einer eigenen Ansteuerung an der Lenksäule angeordnet ist.

## Patentansprüche

1. Warneinrichtung für ein Fahrzeug, insbesondere ein Kraftfahrzeug, mit zumindest einem mit einem Fahrzeugführer bei einem Führen des Fahrzeugs in Berührung stehenden, als Signalübermittler zur Übermittlung eines haptischen Warnsignals an den Fahrzeugführer ausgebildeten Kontaktelement, wobei ein Motor (11) zu einer Bewegung des Kontaktelementes (3) vorgesehen ist und wobei das Kontaktelement (3) mittels des Motors (11) in einer einfachen Hin- und Herbewegung auslenkbar ist, **dadurch gekennzeichnet, dass** das Kontaktelement (3) ein Fahrzeuglenkrad (2) ist und dass der Motor ein an dem Lenkrad vorhandener Stellmotor zu einer Höhen- und/oder Längenverstellung des Lenkrads (2) ist.

2. Warneinrichtung nach einem der vorhergehenden Ansprüche, **dadurch gekennzeichnet, dass** ein mit dem Motor (11) verbundenes Steuergerät (8) und zumindest ein mit dem Steuergerät (8) verbundenes Erfassungselement (5) zur Umfelderfassung des Fahrzeugs vorgesehen sind.

3. Warneinrichtung nach einem der vorhergehenden Ansprüche, **dadurch gekennzeichnet, dass** der Motor (11) ein elektrischer Stellmotor (10) ist.

4. Verfahren zur Übermittlung eines Warnsignals an einen Fahrzeugführer eines Fahrzeugs, insbesondere eines Kraftfahrzeugs, wobei ein mit dem Fahrzeugführer bei einem Führen des Fahrzeugs in Berührung stehendes Kontaktelement ein haptisches Warnsignal an den Fahrzeugführer übermittelt, wobei das Kontaktelement (3) zur Übermittlung des Warnsignals an den Fahrzeugführer aus einer Ausgangsposition eine einfache Bewegung in einer ersten Richtung in eine Zwischenposition und anschließend in eine der ersten Richtung entgegen gesetzte zweite Richtung zurück in die Ausgangsposition ausführt, **dadurch gekennzeichnet, dass** das Kontaktelement (3) ein Fahrzeuglenkrad (2) ist und dass das Kontaktelement über einen an dem Lenkrad vorhandenen Stellmotor zu einer Höhen- und/oder Längenverstellung des Lenkrads (2) bewegt wird.

5. Verfahren nach Anspruch 4, **dadurch gekennzeichnet, dass** die Bewegung des Kontaktelementes (3) in die erste Richtung und/oder in die zweite Richtung abgestuft ist.

6. Verfahren nach Anspruch 4 oder 5, **dadurch gekennzeichnet, dass** die Bewegung des Kontaktelementes (3) eine maximale Zeitdauer von 0,25 s bis 1 s umfasst.

7. Verfahren nach einem der Ansprüche 4 bis 6, **dadurch gekennzeichnet, dass** die Bewegung des Kontaktelementes (3) eine maximale Auslenkung des Kontaktelementes (3) in einer Richtung von 30 mm umfasst.

8. Verfahren nach einem der Ansprüche 4 bis 7, **dadurch gekennzeichnet, dass** eine Höhe einer Beschleunigung der Bewegung des Kontaktelementes (3) und/oder einer Geschwindigkeit der Bewegung des Kontaktelementes (3) und/oder einer Auslenkung der Bewegung des Kontaktelementes (3) ein Maß ist für eine dem Warnsignal zugeordnete Bedeutung.

## Claims

1. Warning device for a vehicle, in particular a motor vehicle, having at least one contact element which is in contact with a vehicle driver when he is driving the vehicle and is in the form of a signal transmitter for transmitting a haptic warning signal to the vehicle driver, with a motor (11) for moving the contact element (3) being provided, and it being possible for the contact element (3) to be deflected in a simple to and fro movement by means of the motor (11), **characterized in that** the contact element (3) is a vehicle steering wheel (2), and **in that** the motor is an actuating motor, which is present on the steering wheel, for adjusting the height and/or length of the steering wheel (2).

2. Warning device according to Claim 1, **characterized in that** a controller (8), which is connected to the motor (11), and at least one sensing element (5), which is connected to the controller (8), for sensing the area surrounding the vehicle are provided.

3. Warning device according to either of the preceding claims, **characterized in that** the motor (11) is an electric actuating motor (10).

4. Method for transmitting a warning signal to a driver of a vehicle, in particular of a motor vehicle, with a contact element which is in contact with the vehicle driver when he is driving the vehicle transmitting a haptic warning signal to the vehicle driver, with the contact element (3) executing, from a starting position, a simple movement, in a first direction, into an intermediate position and then, in a second direction which is opposite the first direction, back into the starting position, in order to transmit the warning signal to the vehicle driver, **characterized in that** the contact element (3) is a vehicle steering wheel (2), and **in that** the contact element is moved by means of an actuating motor, which is present on the steering wheel, for adjusting the height and/or length of the steering wheel (2).

5. Method according to Claim 4, **characterized in that** the movement of the contact element (3) into the first direction and/or into the second direction is stepped.

6. Method according to Claim 4 or 5, **characterized in that** the movement of the contact element (3) involves a maximum time period of 0.25 s to 1 s.

7. Method according to one of Claims 4 to 6, **characterized in that** the movement of the contact element (3) involves a maximum deflection of the contact element (3) in one direction of 30 mm.

8. Method according to one of Claims 4 to 7, **characterized in that** a level of an acceleration of the movement of the contact element (3) and/or of a speed of the movement of the contact element (3) and/or of a deflection of the movement of the contact element (3) is a measure of an importance assigned to the warning signal.

## Revendications

1. Dispositif d'avertissement pour véhicule, en particulier pour véhicule automobile,
qui présente au moins un élément de contact en contact avec le conducteur du véhicule lorsque ce dernier conduit le véhicule et configuré comme dispositif de transmission de signaux qui transmet un signal tactile d'avertissement au conducteur du véhicule,
un moteur (11) étant prévu pour déplacer l'élément de contact (3) et l'élément de contact (3) pouvant être déplacé en simple va-et-vient au moyen du moteur (11),
**caractérisé en ce que**
l'élément de contact (3) est le volant (2) du véhicule et **en ce que** le moteur est un moteur pas-à-pas prévu sur le volant et qui permet d'ajuster le volant (2) en hauteur et/ou en longueur.

2. Dispositif d'avertissement selon la revendication 1 précédentes, **caractérisé en ce qu'**il présente un appareil de commande (8) relié au moteur (11) et au moins un élément de détection (5) relié à l'appareil de commande (8) et servant à détecter l'environnement du véhicule.

3. Dispositif d'avertissement en ce que le moteur (11) est un moteur électrique pas-à-pas (10).

4. Procédé de transmission d'un signal d'avertissement au conducteur d'un véhicule, en particulier d'un véhicule automobile, dans lequel un élément de contact qui est en contact avec le conducteur du véhicule pendant qu'il conduit le véhicule transmet un signal tactile d'avertissement au conducteur du véhicule, l'élément de contact (3) destiné à transmettre le signal d'avertissement au conducteur du véhicule exécutant depuis une position initiale un simple déplacement dans une première direction jusque dans une position intermédiaire et ensuite dans une direction opposée à la première direction pour revenir dans la position de départ,
**caractérisé en ce que**
l'élément de contact (3) est le volant (2) du véhicule et **en ce que** le moteur est un moteur pas-à-pas prévu sur le volant et qui permet d'ajuster le volant (2) en hauteur et/ou en longueur.

5. Procédé selon la revendication 4, **caractérisé en ce que** les déplacements de l'élément de contact (3) dans la première direction et/ou dans la deuxième direction sont étagés.

6. Procédé selon les revendications 4 ou 5, **caractérisé en ce que** le déplacement de l'élément de contact (3) a une durée maximale de 0,25 s à 1 s.

7. Procédé selon l'une des revendications 4 à 6, **caractérisé en ce que** le déplacement de l'élément de contact (3) comporte une déviation maximale de l'élément de contact (3) de 30 mm dans une direction.

8. Procédé selon l'une des revendications 4 à 7, **caractérisé en ce que** le niveau d'accélération du déplacement de l'élément de contact (3), la vitesse du déplacement de l'élément de contact (3) et/ou la déviation du déplacement de l'élément de contact (3) constituent une mesure de l'importance associée au signal d'avertissement.
